# EUROPÄISCHE PATENTSCHRIFT

(11) **EP 0 364 828 B1**
(45) Veröffentlichungstag und Bekanntmachung des Hinweises auf die Patenterteilung: **04.01.1995**
(21) Anmeldenummer: 89118536.5
(22) Anmeldetag: 06.10.1989
(51) Int. Cl.: B29C 70/20, B29B 15/12

(54) **Extrusionsimprägniervorrichtung**
Extrusion impregnation apparatus
Installation d'imprégnation par extrusion

(30) Priorität: 19.10.1988 DE 3835574
(43) Veröffentlichungstag der Anmeldung: 25.04.1990
(73) Patentinhaber: HOECHST AKTIENGESELLSCHAFT, 65926 Frankfurt am Main (DE)
(72) Erfinder: Augustin, Günter, Dipl.-Ing., D-1000 Berlin 44 (DE); Hinrichsen, Georg, Prof. Dr., D-1000 Berlin 45 (DE); Traencker, Hans-Joachim, Dr., B-2060 Merksen (BE)

(56) Entgegenhaltungen:
- EP-A- 0 287 427
- EP-A- 0 320 653
- US-A- 2 538 628
- US-A- 3 993 726
- US-A- 4 312 917
- US-A- 4 728 387

## Beschreibung

Die Erfindung betrifft eine Extrusionsimprägniervorrichtung zur kontinuierlichen Herstellung von unidirektional faserverstärkten Formkörpern aus Polymeren mit Fasergehalten zwischen 50 und 70 Vol-%. Sie besteht aus einem geteilten Gehäuse, das einen Extruderanschluß aufweist mit einer Schmelzezuführung, das ferner einen teilbaren Imprägniereinsatz aufweist mit einer auswechselbaren Eintrittsdüse für Fasermaterial und einer auswechselbaren Austrittsdüse für die faserverstärkten Linearprofile und das ein Spreitungselemlent (Umlenkelement) umfaßt.

Solche Vorrichtungen sind aus US-A-4 312 917 bekannt. Bei diesen Vorrichtungen wird das Fasermaterial einem plastifizierten Materialfluß zugeführt. Zur Verbesserung der Benetzung der Fasermaterials wird dieses über Umlenkelemente geleitet. Eine gleichmäßige Imprägnierung wird jedoch trotz Spreitung nicht erreicht. Hier will die Erfindung Abhilfe schaffen.

Die Aufgabe wird durch eine Extrusionsimprägniervorrichtung der eingangs genannten Art gelöst, die dadurch gekennzeichnet ist, daß das Gehäuse mit einem Überlauf versehen ist und ein Spreitungselement als Einspritzelement für die Schmelze ausgebildet ist. Die Heizeinrichtung kann aus einem geteilten Heizmantel bestehen.

Durch die Ausgestaltung eines Spreitungselements als Einspritzelement für die Schmelze wird eine besonders gleichmäßige Imprägnierung erreicht.

Nach Einlegung des Faserstranges kann der Imprägniereinsatz entweder für sich verschlossen und in den Heizmantel eingeschoben werden, oder das Verschließen des Einsatzes erfolgt durch einen Schließmechanismus über die geteilte Heizschale.

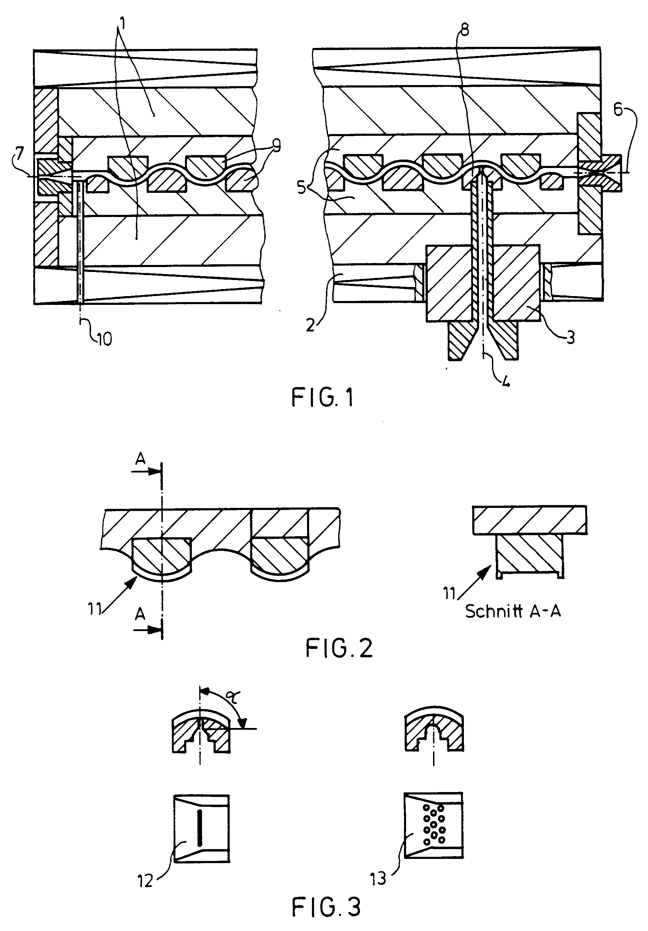

Der Imprägniereinsatz besteht aus zwei gegenüberliegenden Reihen von gekrümmten Spreitungselementen oder Umlenkelementen (9), die im geschlossenem Zustand einen engen ondulierten Polymerfließkanal ausbilden. Diese Umlenkelemente können entweder auswechselbar in den Einsatz eingepaßt oder direkt als Fräskontur in den Einsatz eingearbeitet werden. Figur 2 zeigt ein auswechselbares Umlenkelement.

Der sich ausbildende Polymerfließkanal wird durch seitliche Begrenzungsstege (11) an den Umlenkungselementen (Fig. 2) bezüglich seines Querschnitts derart dimensioniert, daß ein vorbestimmter (maximaler) Aufweitungsgrad des Fasergebildes eingestellt wird. Die relative Lage der Spreitungselemente zueinander wird so gewählt, daß das Faserband nur wenig aus seiner geradlinigen Bahn ausgelenkt und das Schmelzevolumen klein gehalten wird.

An den ersten Umlenkelementen wird der unter Vorspannung eingeleitete Faserstrang vorgewärmt und mit vorbestimmter Aufweitung einem Einspritzelement, welches über einen Angußkanal mit Polymerschmelze versorgt wird, zugeführt. Die Polymerinjektion kann erfolgen über einen schlitzförmigen Anguß (12) unter verschiedenen Einspritzwinkeln (45° , 135° ) oder über einen vielpunktförmigen Anguß (13). Figur 3 zeigt solche Einspritzelemente.

Um ein Aufsplitten des Faserstranges zu vermeiden und den Polymerfließkanal gegen die Vorwärmzone abzudichten, wird für das Einspritzelement über die Begrenzungsstege ein geringerer Aufweitungsgrad eingestellt als im Fließkanal.

Der unter Vorspannung über das Einspritzelement geführte Faserstrang wird von der injizierten Schmelze teilweise unter Verdrängung der vorhandenen Gasphase durchdrungen, freigesetzte Gase können über die Eintrittsdüse entweichen. Gleichzeitig wird der Fließkanal mit Schmelze aufgefüllt.

Der vorimprägnierte Strang wird dann über die folgenden Spreitungselemente nachimprägniert, wobei weiteres Polymermaterial aus dem Fließkanal aufgenommen werden kann.

Während des Imprägnierprozesses findet eine gleichsinnige Bewegung von Schmelze und Faserband durch den Fließkanal statt. Das Verfahren kann derart betrieben werden, daß der Schmelzbedarf über die Extrusionsgeschwindigkeit exakt angepaßt wird, oder daß mit Schmelzeüberschuß gefahren wird, wobei der Überschuß über einen vor der Austrittsdüse angebrachten Überlauf abgeführt wird. Bei letzterer Variante wird der Faserstrang intensiver durchflutet und im Produktionsprozeß entstehender Faserbruch kann ausgespült werden.

Fasergehalt und Querschnittsgeometrie der Linearprofile werden über die Austrittsdüse eingestellt.

Das Werkzeug ist derart konzipiert, daß faserschonende Imprägnierung unter Minimierung des Schmelzevolumens erreicht wird. Auf diese Weise kann die Schmelze rasch auf die für die Imprägnierung notwendige Temperatur gebracht werden, ohne daß ein merklicher thermischer Abbau auftritt. Gleichzeitig wird die Schergeschwindigkeitsabhängigkeit der Schmelzviskosität optimal ausgenutzt.

Das Verfahren läßt deshalb auch die Verarbeitung von thermisch extrem empfindlichen Polymeren zu.

Das Werkzeug ist zur Herstellung von Profilen aus praktisch allen bekannten Fasermaterialien geeignet und kann für praktisch alle thermoplastischen Kunststoffe angewendet werden. Beispiele für Fasern sind Glasfaserrovings und Kohlenstoff-Fasern, Beispiele für thermoplastische Kunststoffe: Polyamide, (Polyamid 6, Polyamid 66, Polyamid 12) aliphatische Polyester (Polyethylenterephthalat, Polybutylenterephthalat, Polyarylensulfide, Polyphenylensulfid) und Mischungen dieser Thermoplasten untereinander.

Gegenstand der Erfindung ist auch ein Verfahren zur Herstellung solcher Profile mit Hilfe des Werkzeugs der Erfindung.

### Beispiel 1

Ein E-Glasfaserroving mit 2400 tex (Typ RX 28, der Owens Corning Fiberglass) wurde in dem Extrusionswerkzeug gemäß Fig. 1 mit der Schmelze eines niedrigviskosen Polyamid-6 (BAYER AG) bei einer Massetemperatur von ca. 300°C zu rechteckigen Linearprofilen (Querschnitt: ca. 0,3 mm x 5 mm) verarbeitet.

Unter Verwendung eines schlitzförmigen Angusses mit eine Einspritzwinkel α = 90° wurde bei verschlossenem Überlauf die Extrusionsgeschwindigkeit an den Schmelzeverbrauch (100 %ige Materialausbeute) angepaßt.

Die bei einer Produktionsgeschwindigkeit von 3,5 m/min hergestellten Bänder hatten einen Fasergehalt von ca. 68 Vol-% und zeigten infolge ihrer hohen Imprägniergüte ausgezeichnete mechanische Eigenschaften.

| | |
|---|---|
| Zugfestigkeit [MPa] | 1321 ± 20 |
| Biegefestigkeit [MPa] | 1121 ± 18 |
| Biege-E-Modul [GPa] | 47,6 ± 0,9 |
| Bruchdehnung [%] | 3,2 ± 0,2 |

### Beispiel 2

Wie in Beispiel 1 wurde Polyethylenterephthalat (Tenite 7741) verarbeitet. Die mit einem Fasergehalt von ca. 60 Vol-% bei einer Produktionsgeschwindigkeit von 3,6 m/min hergestellten rechteckigen Linearprofile zeigten ähnlich gute mechanische Eigenschaften.

| | |
|---|---|
| Zugfestigkeit [MPa] | 1349 ± 9 |
| Biegefestigkeit [MPa] | 1159 ± 20 |
| Biege-E-Modul [GPa] | 39 ± 1 |
| Bruchdehnung [%] | 3,6 ± 0,1 |

### Beispiel 3

Wie in Beispiel 1 wurde für Polyphenylensulfid (Typ A 6112046, der BAYER AG) bei einer Massetemperatur von ca. 350° C und einem Einspritzwinkel α = 45° verarbeitet. Es wurden rechteckige Linearprofile mit Fasergehalten von ca. 64 Vol-% bei einer Produktionsgeschwindigkeit von 3,0 m/min hergestellt.

| | |
|---|---|
| Zugfestigkeit [MPa] | 1327 ± 8 |
| Biegefestigkeit [MPa] | 1145 ± 15 |
| Biege-E-Modul [GPa] | 43,2 ± 2,1 |
| Bruchdehnung [%] | 3,4 ± 0,1 |

### Beispiel 4

Wie in Beispiel 1 wurde mittelviskoses Polyamid 66 (BAYER AG) bei einer Massetemperatur von ca. 320° C und einem Einspritzwinkel α = 45° verarbeitet. Die mit einer Produktionsgeschwindigkeit von 4,0 m/min hergestellten rechteckigen Linearprofile hatten einen Fasergehalt von ca. 64 Vol-% und wiesen ausgezeichnete mechanische Eigenschaften auf.

| | |
|---|---|
| Zugfestigkeit [MPa] | 1530 ± 9 |
| Biegefestigkeit [MPa] | 1243 ± 11 |
| Biege-E-Modul [GPa] | 41,7 ± 0,8 |
| Bruchdehnung [%] | 3,4 ± 0,2 |

### Beispiel 5

Wie in Beispiel 1 wurde Polyamidimid bei einer Massetemperatur von ca. 420° C und einem Einspritzwinkel von α = 45° verarbeitet. Die bei einer Geschwindigkeit von 15 m/min produzierten rechteckigen Linearprofile wiesen einen Fasergehalt von 67 Vol-% auf. Faserbrüche auf der Oberfläche deuteten auf weniger gute mechanische Eigenschaftswerte hin.

| | |
|---|---|
| Zugfestigkeit [MPa] | 1090 ± 12 |
| Biegefestigkeit [MPa] | 880 ± 90 |
| Biege-E-Modul [GPa] | 34 ± 8 |
| Bruchdehnung [%] | 3,1 ± 0,5 |

### Beispiel 6

Ein C-Faserroving mit 1600 tex (Typ HTA 16000, Enka AG) wurde wie in Beispiel 1 mit der Schmelze eines niedrigviskosen Polyamid 6 (BAYER AG) bei einer Massetemperatur von ca. 300° C mit einer Produktionsgeschwindigkeit von 0,7 m/min zu unidirektional faserverstärkten Bändern verarbeitet.

Die Schmelzezuführung erfolgte über einen Einspritzwinke α = 135° C im Überschuß (Schmelzdurchsatz; Schmelzverbrauch = 10:1), wobei entstandener Faserbruch mit dem Schmelzeüberschuß über den Überlauf ausgetragen wurde. Die hergestellten Bändchen hatten einen Fasergehalt von (47 ± 2) Vol-%.

| | |
|---|---|
| Biegefestigkeit [MPa] | 945 ± 40 |
| Biege-E-Modul [GPa] | 82,3 ± 3,2 |
| Bruchdehnung [%] | 1,4 ± 0,3 |

### Beispiel 7

Wie in Beispiel 6 wurde Polyphenylensufid (Typ A 6112046, BAYER AG) bei einer Massetemperatur von ca. 360° C und einer Geschwindigkeit von 0,8 m/min verarbeitet. Die unidirektional faserverstärkten Bänder hatten einen Fasergehalt von (47 ± 2) Vol-%.

| | |
|---|---|
| Biegefestigkeit [MPa] | 1243 ± 27 |
| Biege-E-Modul [GPa] | 86,3 ± 1,7 |
| Bruchdehnung [%] | 1,6 ± 0,1 |

## Patentansprüche

1. Extrusionsimprägniervorrichtung aus einem geteilten Gehäuse (1) mit Heizeinrichtung, das einen Extruderanschluß (3) aufweist mit einer Schmelzezuführung (4), das ferner einen teilbaren Imprägniereinsatz (5) aufweist mit einer auswechselbaren Eintrittsdüse für Fasermaterial (6) und einer auswechelsbaren Austrittsdüse für faserverstärkten Linearprofile (7) und das Spreitungselemente (Umlenkelemente) (9) umfaßt, dadurch gekennzeichnet, daß das Gehäuse mit einem Überlauf (10) versehen ist und ein Spreitungselement (8) als Einspritzelement für die Schmelze ausgebildet ist.

2. Extrusionsimprägniervorrichtung nach Anspruch 1, dadurch gekennzeichnet, daß die Heizeinrichtung aus einem geteilten Heizmantel (2) besteht.

## Claims

1. An extrusion impregnation apparatus comprising a divided housing (1) with heating device, which housing has an extruder connection (3) with a melt feed (4), which furthermore has a divisible impregnation insert (5) with an exchangeable inlet nozzle for fibrous material (6) and an exchangeable outlet nozzle for fiber-reinforced linear profiles (7) and which encloses spreading elements (deflecting elements) (9), wherein the housing is provided with an overflow (10) and one spreading element (8) is designed as an injection element for the melt.

2. The extrusion impregnation apparatus as claimed in claim 1, wherein the heating device comprises a divided heating jacket (2).

## Revendications

1. Installation d'extrusion et d'imprégnation composé d'une enceinte compartimentée (1) avec un dispositif de chauffage, qui présente un raccord pour l'extrudeuse (3) avec une admission de la matière fondue (4), qui présente de plus une unité d'imprégnation divisible (5) avec une tuyère d'admission rechangeable pour le matériau fibreux (6) et une tuyère de sortie rechangeable pour le profilé linéaire renforcé de fibres (7) et des éléments de dispersion (éléments de déviation) (9), caractérisée en ce que l'enceinte est équipée d'un déversoir (10) et qu'un élément de dispersion (8) est façonné comme élément d'injection pour la matière fondue.

2. Installation d'extrusion et d'imprégnation selon la revendication 1, caractérisée en ce que le dispositif de chauffage se compose d'une chemise chauffante divisée (2).
